# EUROPEAN PATENT APPLICATION

(11) **EP 2 803 437 A2**
(43) Date of publication of application: **19.11.2014**
(21) Application number: 14166441.7
(22) Date of filing: 29.04.2014
(51) Int. Cl.: B23H 7/04, B23H 1/02, B23H 7/38

(54) **Wire electric discharge processing machine with rust preventing function**

(30) Priority: 17.05.2013 JP 2013105225
(71) Applicant: FANUC CORPORATION, Oshino-mura Minamitsuru-gun Yamanashi 401-0597 (JP)
(72) Inventor: Matsunaga, Tomoaki, Minamitsuru-gun,, Yamanashi 401-0597 (JP)
(74) Representative: Ward, James Norman

(57) **Abstract**

An electric discharge processing machine applies a voltage to a processing subject and a corrosion preventing electrode so as to prevent the corrosion of the processing subject. A reference current value which is proportional to the surface area of the processing subject is set so that a current density is maintained constantly, and a voltage of a corrosion preventing power supply is controlled so that a corrosion preventing current falls within a predetermined range.

## Description

### BACKGROUND OF THE INVENTION

### 1. Field of the Invention

The present invention relates to a wire electric discharge processing machine that prevents rust of a processing subject.

### 2. Description of the Related Art

In a wire electric discharge processing machine that uses water as a processing liquid, it is necessary to prevent rust of a processing subject since the processing subject contacts the water. As disclosed in JP5-220618A and JP2004-291206A, there is known a method in which a corrosion preventing electrode is provided so as to face a processing subject through a processing liquid and a voltage is applied from an external power supply to the processing subject and the corrosion preventing electrode so as to prevent the rust of the processing subject while using the processing subject as a negative pole and using the corrosion preventing electrode as a positive pole .

As described above, in a case where a voltage is applied between the processing subject and the corrosion preventing electrode so as to prevent the corrosion of the processing subject, when the current density of the processing subject with respect to the current supplied from the corrosion preventing electrode is smaller than a predetermined value, a sufficient corrosion preventing effect may not be achieved. Further, when the current density is too large, the lifetime of the corrosion preventing electrode is shortened or the processing subject is degraded due to the generation of hydrogen. Accordingly, in a case where the current density is not controlled, a sufficient corrosion preventing effect or a sufficient rust preventing effect may not be achieved in accordance with the size of the processing subject. Here, the current density is a value that is obtained by dividing a current value of a current supplied from a rust preventing power supply by a physical quantity concerning the surface area of the processing subject.

### SUMMARY OF THE INVENTION

Therefore, an object of the present invention is to provide a wire electric discharge processing machine with a rust preventing function that changes a value of a voltage applied between a processing subject and a corrosion preventing electrode and controls a current density with respect to the processing subject at a constant value.

According to the present invention, there is provided an electric discharge processing machine with a corrosion preventing power supply unit in which a processing subject and a tool electrode are made to face each other through a processing liquid, a voltage is applied to the processing subject and the tool electrode so as to process the processing subject, and a voltage is applied to the processing subject and a corrosion preventing electrode provided inside the processing liquid, the electric discharge processing machine including: a corrosion preventing power supply voltage value changing unit that changes the application voltage of the corrosion preventing power supply unit so that the density of the current flowing to the processing subject is constantly maintained.

The electric discharge processing machine may include a current detector that detects a current flowing from the corrosion preventing power supply unit to the processing subject; and the corrosion preventing power supply voltage value changing unit that compares the current with a reference current value according to the surface area of the processing subject and constantly maintains the current density by decreasing the application voltage when the current is larger than the reference current value and increasing the application voltage when the current is smaller than the reference current value.

Further, the electric discharge processing machine may include an alarm display unit that displays an alarm when the value of the current density does not fall within a predetermined range.

According to the present invention, it is possible to provide the wire electric discharge processing machine with the rust preventing function that changes the value of the voltage applied between the processing subject and the corrosion preventing electrode and controls the current density with respect to the processing subject at a constant value.

### BRIEF DESCRIPTION OF THE DRAWINGS

The above-described object, the other object, and the feature of the invention will be proved from the description of embodiments below with reference to the accompanying drawings. In these drawings:
FIG. 1 is a diagram illustrating a relation between a reference current value and a surface area of a processing subject;
FIG. 2 is a diagram illustrating a wire electric discharge processing machine with a processing power supply disposed between a wire electrode and a processing subject placed on a table;
FIG. 3 is a diagram illustrating a method of preparing a DC power supply capable of changing a voltage value by an external signal and changing the voltage value based on a signal from a control device;
FIG. 4 is a diagram illustrating a method of preparing a DC power supply or a plurality of resistors and changing a switch by a signal from a control device so as to change a voltage value:
FIG. 5 is a diagram illustrating an embodiment of the present invention;
FIG. 6 is a diagram illustrating a control flow of a corrosion preventing power supply used for preventing rust according to the present invention; and
FIG. 7 is a diagram illustrating a flow including an alarm process step in the control flow of FIG. 6.

### DETAILED DESCRIPTION OF THE PREFERRED EMBODIMENTS

First, in the embodiment below, the current density indicates a value that is obtained by dividing the current value of the current supplied from the corrosion preventing power supply by the physical quantity concerning with the surface area of the processing subject. In a case where the corrosion of the processing subject is prevented by applying a voltage between the processing subject and the corrosion preventing electrode, a sufficient corrosion preventing effect is not achieved when the current density of the processing subject is smaller than a predetermined value. Further, the lifetime of the corrosion preventing electrode is shortened or the processing subject is degraded due to the generation of hydrogen when the current density is too large. Accordingly, when the current density is not controlled so that the current density for preventing rust supplied from the corrosion preventing power supply becomes constantly a predetermined value during the electric discharge process, a sufficient corrosion preventing effect or a sufficient rust preventing effect may not be achieved according to the size, that is, the surface area of the processing subject.

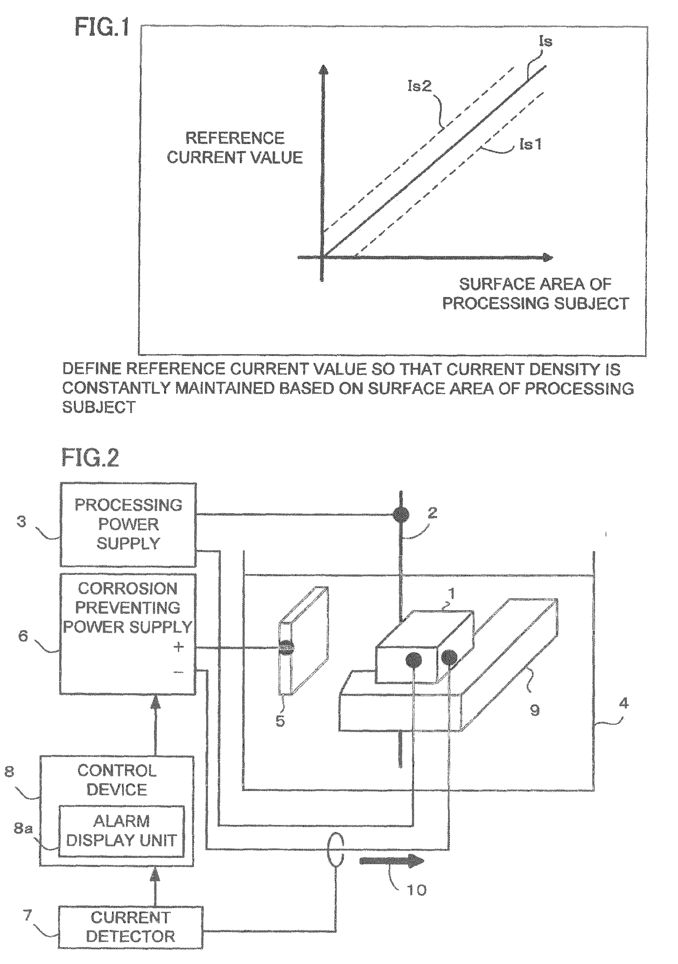

Therefore, in order to control the current density at a constant value, there is a need to supply a current which is proportional to the surface area of the processing subject from the corrosion preventing power supply. Here, the current value of the current supplied from the corrosion preventing power supply is referred to as a reference current value. FIG. 1 illustrates a relation between the reference current value and the surface area of the processing subject. In FIG. 1, Is indicates a relation between the reference current value and the surface area of the processing subject in a case where the current density is constantly maintained at a predetermined value, Is1 indicates a relation therebetween in a case where the current density is slightly smaller than a predetermined value, and Is2 indicates a relation therebetween in a case where the current density is slightly larger than a predetermined value. In this embodiment, the corrosion preventing current is controlled at a value between Is1 and Is2. Furthermore, a plurality of graphs of relations between the reference current value and the surface area of the processing subject may be prepared corresponding to different materials of the processing subjects, and may be stored in a memory of the control device of the wire electric discharge processing machine.

As illustrated in FIG, 2, an wire electric discharge processing machine in which a processing power supply 3 is connected between a wire electrode 2 and a processing subject 1 placed on a table 9 includes a voltage variable corrosion preventing power supply 6 that disposes a corrosion preventing electrode 5 inside a processing tank 4 so as to face the processing subject 1 and applies a voltage between the processing subject 1 and the corrosion preventing electrode 5 so that the processing subject 1 becomes a negative pole and the corrosion preventing electrode 5 becomes a positive pole, a current detector 7 that detects a value of a current 10 flowing between the processing subject 1 and the corrosion preventing electrode 5, and a control device 8 that transmits an instruction of changing the voltage value of the corrosion preventing power supply 6 so that the detected current value becomes the current according to the surface area of the processing subject 1. The current detector 7 detects the current 10 flowing between the processing subject 1 and the corrosion preventing electrode 5. Then, when the voltage value of the corrosion preventing power supply is controlled so that the detected current becomes the current value according to the surface area of the processing subject 1, the current density becomes a predetermined value. Furthermore, the control device 8 includes an alarm display unit 8a that displays an alarm in a case where the current density may not be controlled at a constant value.

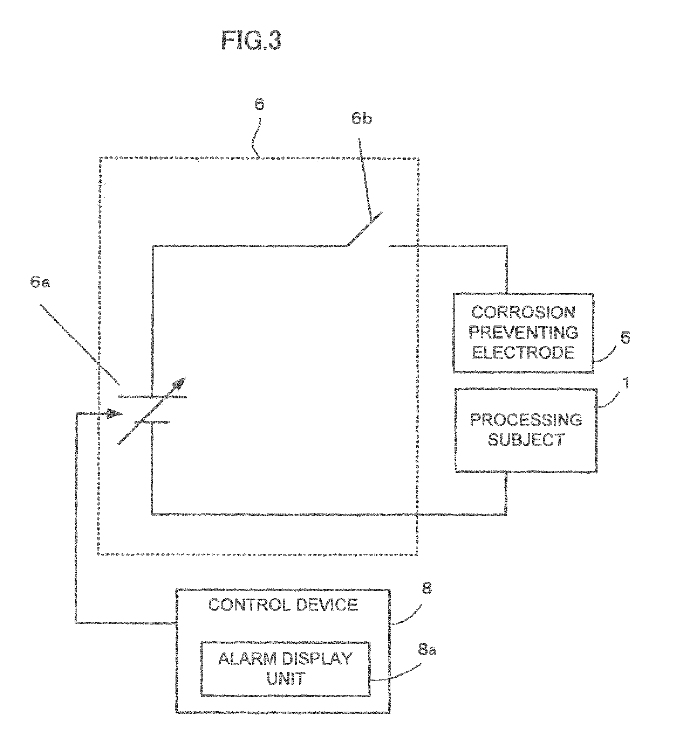

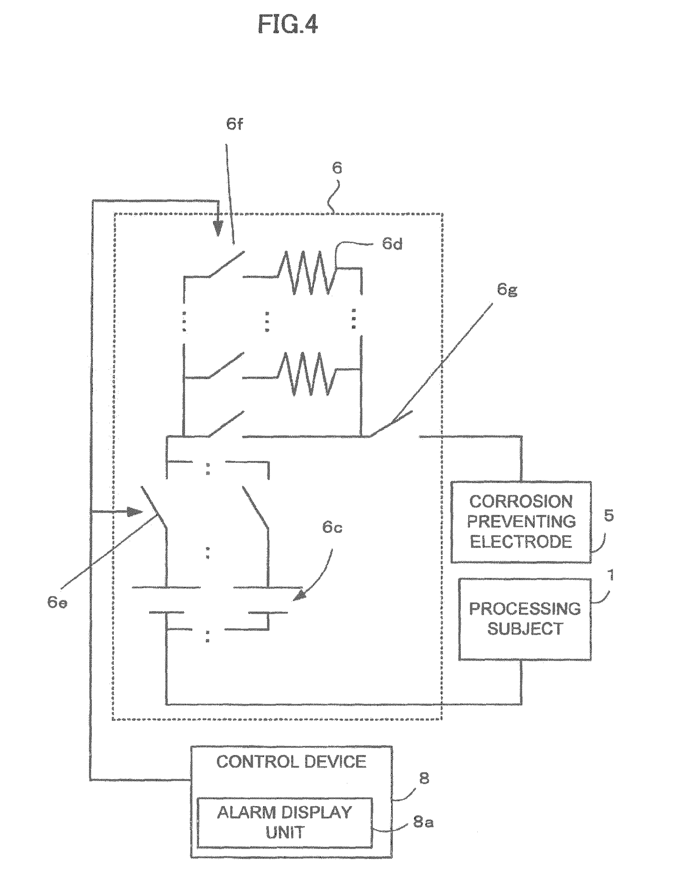

As a method of changing the voltage value of the corrosion preventing power supply, there is known a method of using a DC power supply capable of changing a voltage value by an external signal and changing a voltage value of a variable DC power supply 6a by the signal from the control device 8 as illustrated in FIG. 3, or a method of using a plurality of DC power supplies 6c and resistors 6d and changing switches 6e and switches 6f by the signal from the control device 8 so as to change the voltage value as illustrated in FIG. 4. Furthermore, the switch 6b illustrated in FIG. 3 is a switch that interrupts the application of the voltage from the corrosion preventing power supply 6 between the corrosion preventing electrode 5 and the processing subject 1. Further, a switch 6g illustrated in FIG. 4 is a switch that interrupts the application of the voltage from the corrosion preventing power supply 6 between the corrosion preventing electrode 5 and the processing subject 1.

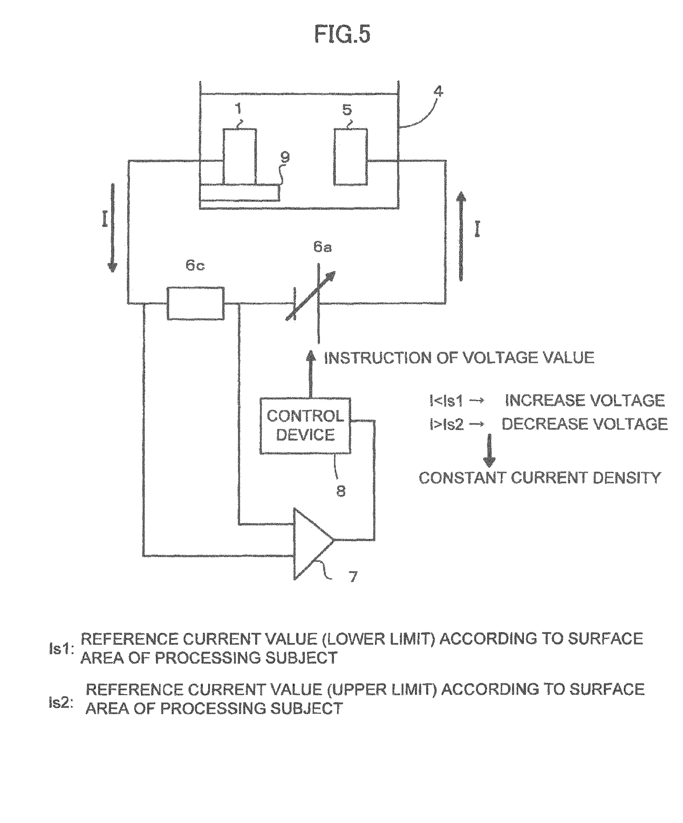

In the embodiment illustrated in FIG. 5, the electric discharge processing machine has a configuration in which a current detecting resistor is provided between the processing subject and the corrosion preventing power supply which includs the variable DC power supply capable of changing the voltage value by the external signal, so as to detect a current value based on the voltages of both ends of the resistor, and the control device compares the detected current value with the reference current value according to the surface area of the processing subject illustrated in FIG. 1. Then, the control device outputs a signal to the variable DC power supply so that the voltage value of the variable DC power supply increases when the detected current is smaller than the reference current value or the voltage value of the variable DC power supply decreases when the detected current is larger than the reference current value, thereby constantly maintaining the current density of the processing subject.

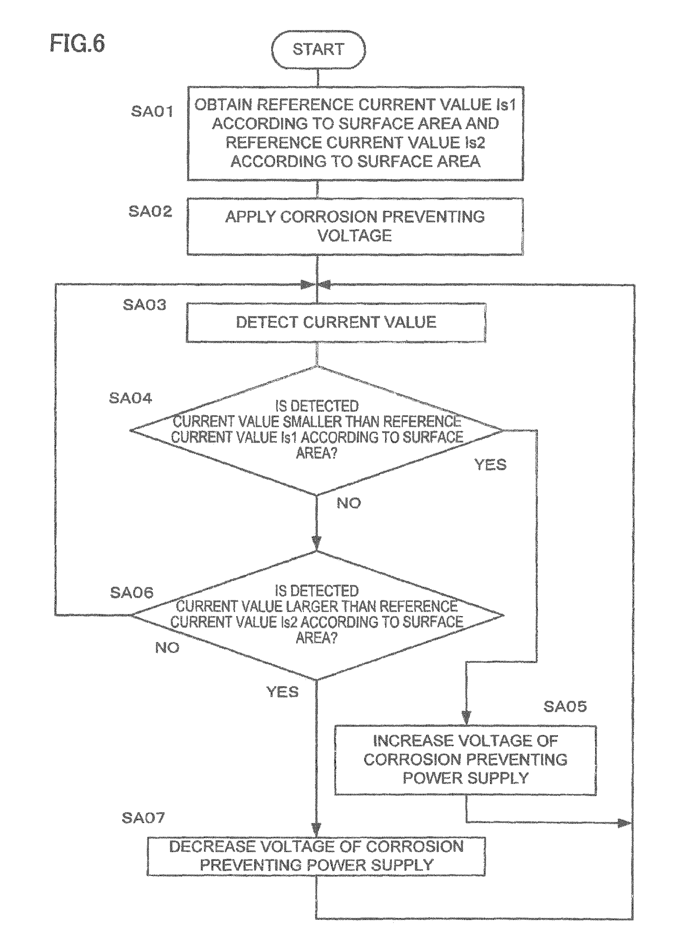

FIG. 6 illustrates a flowchart. The lower-limit value and the upper-limit value of the reference current value are set so as to fall within a certain range. As described above, when the current from the corrosion preventing power supply is controlled at the current value according to the surface area of the processing subj ect, the current density may be constantly maintained, and hence the rust of the processing subject may be stably prevented. The reference current value may be changed according to the materials of the processing subjects.

Hereinafter, this process will be described according to the steps.
[step SA01] The reference current value Is1 according to the surface area and the reference current value Is2 according to the surface area are obtained so that the current density falls within a predetermined range . The surface area is a value corresponding to the surface area of the processing subject, and a value defined by a processing program or a value input by an operator may be used. The reference current value Is1 and the reference current value Is2 are obtained from a memory storing the graph illustrated in FIG. 1 in response to the value of the surface area.
[step SA02] A corrosion preventing voltage is applied from the corrosion preventing power supply.
[step SA03] A current value is detected.
[step SA04] It is determined whether the detected current value is smaller than the reference current value Is1 according to the surface area. Then, the routine proceeds to step SA05 when the detected current value is smaller than the reference current value, that is, in a state YES or the routine proceeds to step SA06 when the detected current value is not smaller than the reference current value, that is, in a state NO.
[step SA05] The voltage of the corrosion preventing power supply is increased, and the routine returns to step SA03.
[step SA06] It is determined whether the detected current value is larger than the reference current value Is2 according to the surface area. Then, the routine proceeds to step SA07 when the detected current value is larger than the reference current value, that is, in a state YES or the routine returns to step SA03 when the detected current value is not larger than the reference current value, that is, in a state NO.
[step SA07] The voltage of the corrosion preventing power supply is decreased, and the routine returns to step SA03.

Furthermore, when the voltage of the corrosion preventing power supply is increased or decreased, a control may be performed in which the voltage is gradually increased or decreased by a predetermined voltage range.

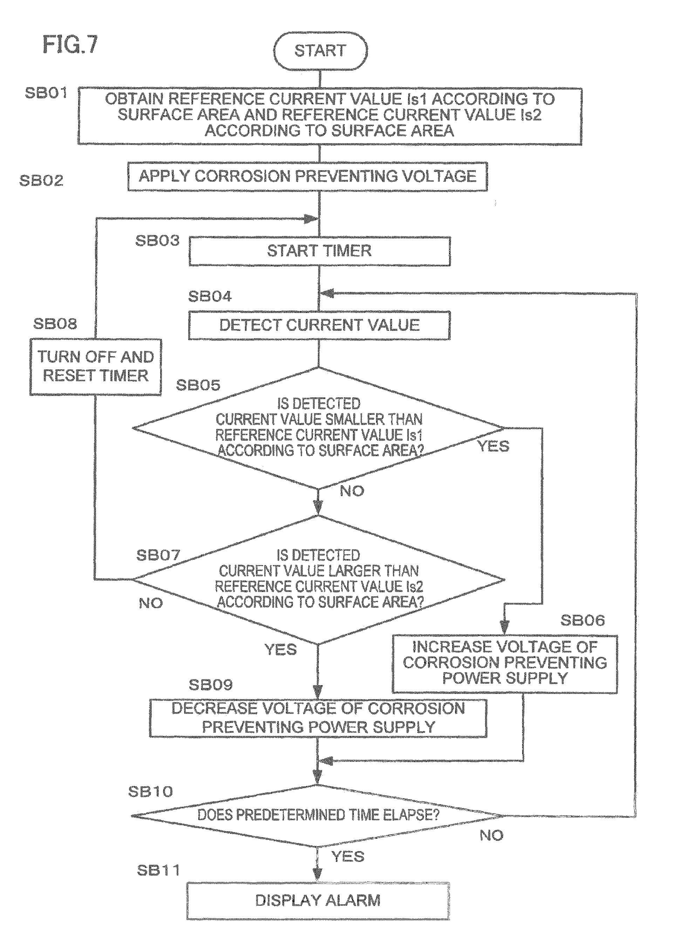

FIG. 7 illustrates a flow including an alarm process step in the control flow illustrated in FIG. 6. When the current value is smaller than the reference value, the degradation of the corrosion preventing electrode or the disconnection of the cable is considered to be the reason for the smaller current value. Meanwhile, when the current value is larger than the reference value, the short-circuiting between the processing subject and the corrosion preventing electrode is considered to be the reason for the larger current value. Here, an alarm is displayed when the value of the current density does not fall within a predetermined range, and hence the degradation of the corrosion preventing electrode or the problem of the corrosion preventing power supply unit may be notified. Hereinafter, this process will be described according to the steps.

Hereinafter, this process will be described according to the steps.
[step SB01] The reference current value Is1 according to the surface area and the reference current value Is2 according to the surface area are obtained so that the current density falls within a predetermined range.
[step SB02] A corrosion preventing voltage of the corrosion preventing power supply is applied.
[step SB03] A timer is started.
[step SB04] A current value is detected.
[step SB05] It is determined whether the detected current value is smaller than the reference current value Is1 according to the surface area. Then, the routine proceeds to step SB06 when the detected current value is smaller than the reference current value, that is, in a state YES or the routine proceeds to step SB07 when the detected current value is not smaller than the reference current value, that is, in a state NO.
[step SB06] The voltage of the corrosion preventing power supply is increased, and the routine proceeds to step SB10.
[step SB07] It is determined whether the detected current value is larger than the reference current value Is2 according to the surface area. Then, the routine proceeds to step SB09 when the detected current value is larger than the reference current value, that is, in a state YES or the routine proceeds to step SB08 when the detected current value is not larger than the reference current value, that is, in a state NO.
[step SB08] The timer is turned off and reset, and the routine returns to step SB03.
[step SB09] The voltage of the corrosion preventing power supply is decreased, and the routine proceeds to step SB10.
[step SB10] It is determined whether a predetermined time elapses. Then, the routine returns to step SB04 when a predetermined time does not elapse, that is, in a state NO or the routine proceeds to step SB11 when a predetermined time elapses, that is, in a state YES.
[step SB11] An alarm is displayed.

Furthermore, when the voltage of the corrosion preventing power supply is increased or decreased, a control may be performed in which the voltage is gradually increased or decreased by a predetermined voltage range.

## Claims

1. An electric discharge processing machine with a corrosion preventing power supply unit in which a processing subject and a tool electrode are made to face each other through a processing liquid, a voltage is applied to the processing subject and the tool electrode so as to process the processing subject, and a voltage is applied to the processing subject and a corrosion preventing electrode provided inside the processing liquid, the electric discharge processing machine further comprising:
a corrosion preventing power supply voltage value changing unit that changes the application voltage of the corrosion preventing power supply unit so that the density of the current flowing to the processing subject is constantly maintained.

2. The electric discharge processing machine according to claim 1, further comprising:
a current detector that detects a current flowing from the corrosion preventing power supply unit to the processing subject; and
the corrosion preventing power supply voltage value changing unit that compares the current with a reference current value according to the surface area of the processing subject and constantly maintains the current density by decreasing the application voltage when the current is larger than the reference current value and increasing the application voltage when the current is smaller than the reference current value.

3. The electric discharge processing machine according to claim 1 or 2, further comprising:
an alarm display unit that displays an alarm when the value of the current density does not fall within a predetermined range.
